# DEMANDE DE BREVET EUROPEEN

(11) **EP 3 499 692 A1**
(43) Date de publication de la demande: **19.06.2019**
(21) Numéro de dépôt: 18210677.3
(22) Date de dépôt: 06.12.2018
(51) Int. Cl.: H02K 21/16, H02K 29/03, H02K 1/14, H02K 3/18, H02K 3/28, H02K 1/27

(54) **MOTEUR ELECTRIQUE A COURANT CONTINU SANS BALAI ET VEHICULE ASSOCIE**

(30) Priorité: 14.12.2017 FR 1762185
(71) Demandeur: Valeo Systèmes d'Essuyage, 78322 Le Mesnil Saint Denis (FR)
(72) Inventeur: HERRADA, Jose-Luis, 78322 Le Mesnil Saint Denis (FR)
(74) Mandataire: Valeo Systèmes d'Essuyage

(57) **Abrégé**

La présente invention concerne un moteur électrique (1) à courant continu sans balais comportant :
- un rotor (3) comprenant au moins deux paires de pôles,
- un stator (5) présentant une pluralité de dents (D1, D2) autour desquelles sont enroulés des bobinages (B1, B2, B3, B'1, B'2, B'3) formant des bobines d'excitation électromagnétique du rotor (3),
dans lequel le stator (5) comprend un premier type de dent (D1) couvrant un premier angle électrique et un deuxième type de dent (D2) couvrant un deuxième angle électrique différent du premier angle électrique et en ce qu'une phase du moteur est formée par des bobinages (B1, B'1 ou B2, B'2 ou B3, B'3) enroulés sur des dents du premier (D1) et du deuxième (D2) type.

## Description

La présente invention concerne un moteur électrique à courant continu sans balai destiné notamment à des équipements de véhicule automobile.

De nombreux moteurs électriques à courant continu sans balais sont utilisés dans les équipements de véhicules automobiles notamment dans les motoréducteurs des dispositifs d'essuyage.

Les moteurs électriques à courant continu sans balai peuvent présenter de nombreux avantages comme une grande durée de vie, un encombrement et une consommation réduits.

De plus, en appliquant une commande sensiblement sinusoïdale il est possible d'obtenir un faible niveau sonore.

La présente invention vise donc à proposer un moteur à courant continu sans balai ayant un faible niveau sonore.

A cet effet, la présente invention concerne un moteur électrique à courant continu sans balais comportant :
- un rotor comprenant au moins deux paires de pôles,
- un stator présentant une pluralité de dents autour desquelles sont enroulés des bobinages formant des bobines d'excitation électromagnétique du rotor,
dans lequel le stator comprend un premier type de dent couvrant un premier angle électrique et un deuxième type de dent couvrant un deuxième angle électrique différent du premier angle électrique et en ce qu'une phase du moteur est formée par des bobinages enroulés sur des dents du premier et du deuxième type.

L'utilisation de dents de deux types différents couvrant deux angles électriques différents et en appliquant des commandes de forme créneaux sur les différentes bobines, on obtient une force électromotrice selon une forme en dents de scie ou en escalier (correspondant à la somme des créneaux de longueur différente) s'approchant d'une forme sinusoïdale qui permet d'obtenir un fonctionnement plus « doux » et donc un niveau sonore plus faible. De plus, le couple généré à faible vitesse de rotation est plus important.

Selon un autre aspect de la présente invention, le moteur électrique comprend trois phases.

Selon un autre aspect de la présente invention, les trois phases couvrent le même angle électrique et sont décalées de 120° électriques les unes des autres.

Selon un autre aspect de la présente invention, une phase est associée à deux dents du premier type et deux dents du deuxième type, les dents du même type associées à une phase étant disposées à 180° mécaniques l'une de l'autre, les différentes dents associées une phase étant disposées à 90° mécaniques les unes des autres.

Selon un autre aspect de la présente invention, le rapport entre l'angle électrique couvert par le deuxième type de dent et l'angle électrique couvert par le premier type de dent est compris entre 0,6 et 0,9, l'ensemble des dents associées à une phase couvrant un angle électrique correspondant à 360° divisé par le nombre de paires de pôles du rotor.

Selon un autre aspect de la présente invention, le nombre de spires d'un bobinage enroulé sur une dent du premier type et le nombre de spires d'un bobinage du deuxième type est le même.

Selon un autre aspect de la présente invention, le nombre de spires d'un bobinage enroulé autour d'une dent du premier type est supérieur au nombre de spires d'un bobinage enroulé autour d'une dent du deuxième type.

Selon un autre aspect de la présente invention, le nombre de spires d'un bobinage enroulé autour d'une dent du premier type est inférieur au nombre de spires d'un bobinage enroulé autour d'une dent du deuxième type.

Selon un autre aspect de la présente invention, les bobinages associés à une phase sont reliés en série.

Selon un autre aspect de la présente invention, les bobinages associés à une phase et enroulés sur des dents du premier type sont reliés en parallèle pour former un premier sous-ensemble, les bobinages associés à ladite phase et enroulés sur des dents du deuxième type sont reliés en parallèle pour former un deuxième sous-ensemble, le premier et le deuxième sous-ensembles étant reliés en série.

Selon un autre aspect de la présente invention, un bobinage enroulé sur une dent du premier type et associé à une phase est relié en série à un bobinage enroulé sur une dent du deuxième type et associé à ladite phase pour former un sous-ensemble, les différents sous-ensembles associés à une phase étant reliés en parallèle.

Selon un autre aspect de la présente invention, le rotor comprend quatre paires de pôles.

La présente invention concerne également un véhicule automobile comprenant un moteur électrique tel que décrit précédemment.

D'autres caractéristiques et avantages de l'invention ressortiront de la description suivante, donnée à titre d'exemple et sans caractère limitatif, en regard des dessins annexés sur lesquels :
- la figure 1 représente un schéma d'une partie d'un moteur électrique triphasé selon la présente invention,
- La figure 2 représente un schéma de deux dents adjacentes d'un stator selon la présente invention,
- la figure 3 représente un schéma de la répartition des bobinages sur un stator de la présente invention,
- la figure 4 représente la connexion entre les bobinages associés à une phase selon une première configuration,
- la figure 5 représente la connexion entre les bobinages associés à une phase selon une deuxième configuration,
- la figure 6 représente la connexion entre les bobinages associés à une phase selon une troisième configuration,
- la figure 7 représente les signaux de tension fournis par une dent du premier type et une dent du deuxième type associé à une phase,
- la figure 8 représente la somme des signaux fournis par une dent du premier type et une dent du deuxième type associé à une phase.

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

La présente invention concerne un moteur électrique à courant continu sans balais, par exemple un moteur électrique utilisé dans des équipements de véhicules automobiles comme les motoréducteurs des dispositifs d'essuyage.

Le moteur électrique comprend un rotor muni d'au moins deux paires de pôles. Les paires de pôles sont par exemple réalisées par des aimants permanents répartis régulièrement sur le pourtour du rotor.

Le moteur électrique comprend également un stator présentant une pluralité de dents autour desquelles sont enroulés des bobinages formant des bobines d'excitation électromagnétique du rotor. Ces bobines forment les phases du moteur et leur alimentation permet la mise en rotation du rotor par le biais des aimants permanents.

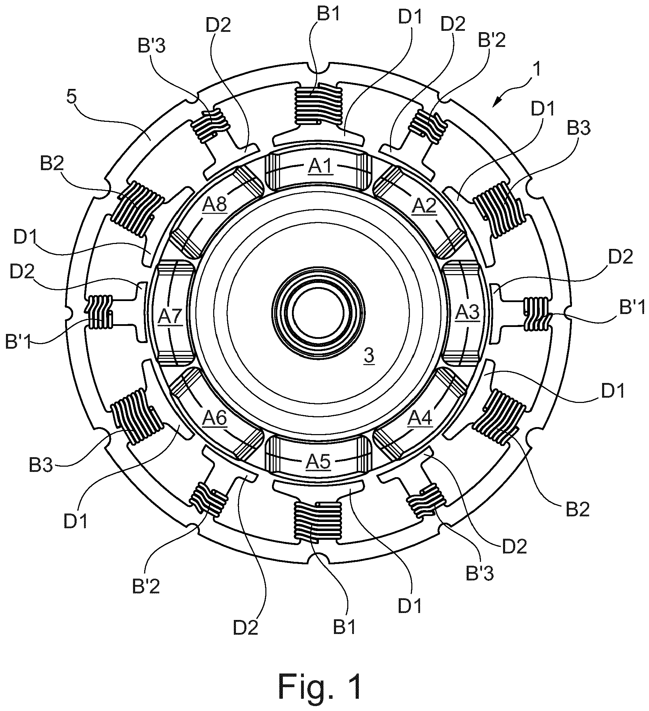

La figure 1 représente une portion d'un tel moteur électrique 1 comprenant un rotor central 3 muni de quatre paires de pôles formées par huit aimants permanents notés A1, A2...A8.

Le moteur électrique 1 comprend également un stator 5 disposé autour du rotor 3 et comprenant douze dents D1, D2 réparties autour du rotor 3.

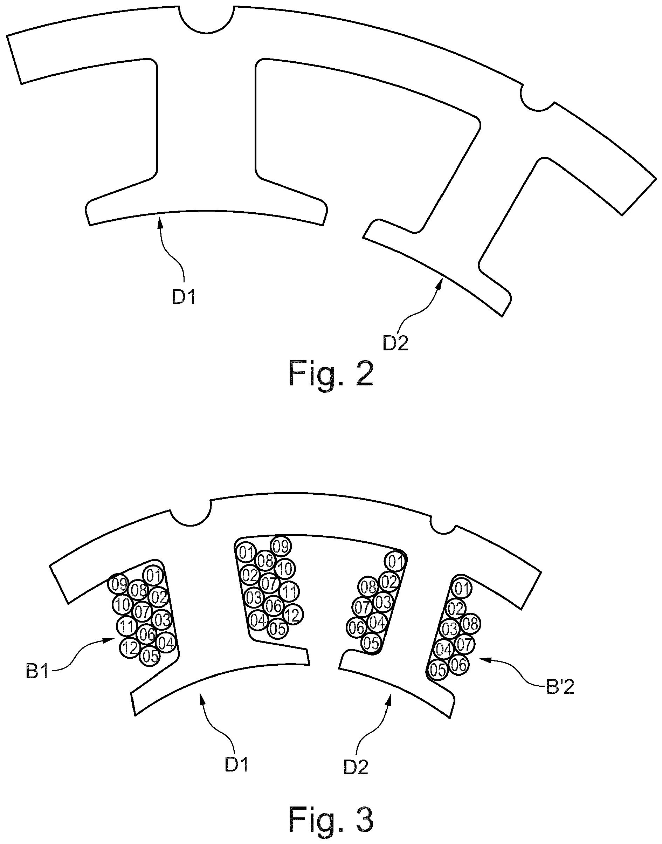

Le stator 5 comprend six dents notées D1 d'un premier type couvrant un premier angle électrique, par exemple 27° et six dents notées D2 d'un deuxième type couvrant un deuxième angle électrique, par exemple 18°, les dents du premier type D1 et du deuxième type D2 étant réparties en alternance, l'écart entre deux dents adjacentes D1, D2 étant fixe pour toutes les dents D1, D2. La figure 2 représente un schéma montrant un exemple représentant les dimensions d'une dent du premier type D1 et d'une dent du deuxième type D2.

Le moteur électrique 1 de la figure 1 est un moteur triphasé de sorte que quatre dents D1, D2, deux dents du premier type D1 et deux dents du deuxième type D2, sont associées à chaque phase. Les bobinages associés à la premier phase sont notés B1 pour les dents du premier type D1 et B'1 pour les dents du deuxième type D2, les bobinages associés à la deuxième phase sont notés B2 pour les dents du premier type D1 et B'2 pour les dents du deuxième type D2, et les bobinages associés à la troisième phase sont notés B3 pour les dents du premier type D1 et B'3 pour les dents du deuxième type D2. Les dents D1, D2 associées à une phase sont disposées à 90° (mécaniques) les unes des autres, deux dents du même type D1 ou D2 (associées à une phase B1, B2, B3) étant disposées à 180° (mécaniques) l'une de l'autre.

Le rapport entre le premier angle électrique associé au premier type de dent D1 et le deuxième angle électrique associé au deuxième type de dent D2 est ici égal à 0,66 mais un rapport compris entre 0,5 et 0,9 peut être choisi.

De plus, dans ce mode de réalisation, comme représenté sur la figure 3, le nombre de spires des bobinages B1, B2 ou B3, ici B1 associés au premier type de dent D1 est supérieur au nombre de spires des bobinages B'1, B'2, B'3, ici B'2, associés au deuxième type de dent D2 de sorte que la valeur de la force électromotrice produite par les bobinages B1, B2, B3 associés au premier type de dent D1 est supérieure à la valeur de la force électromotrice produite par les bobinages B'1, B'2, B'3 associés au deuxième type de dent D2. Cependant, il est également possible d'utiliser des dents du premier type D1 et du deuxième type D2 avec le même nombre de spires de bobinages (les valeurs de forces électromotrices produites sont alors égales) ou des dents du deuxième type D2 avec des bobinages comprenant un nombre de spires supérieur au nombre de spires des bobinages associés au dent du premier type D1 (la valeur de la force électromotrice produite par les bobinages associés au deuxième type de dent D2 est alors supérieure à la valeur de la force électromotrice produite par les bobinages associés au premier type de dent D1).

Par ailleurs, les bobinages des différentes dents d'une phase peuvent être associés selon différentes configurations (nous présentons ici les configurations possibles pour la première phase dans le cas d'un moteur électrique 1 selon la figure 1).

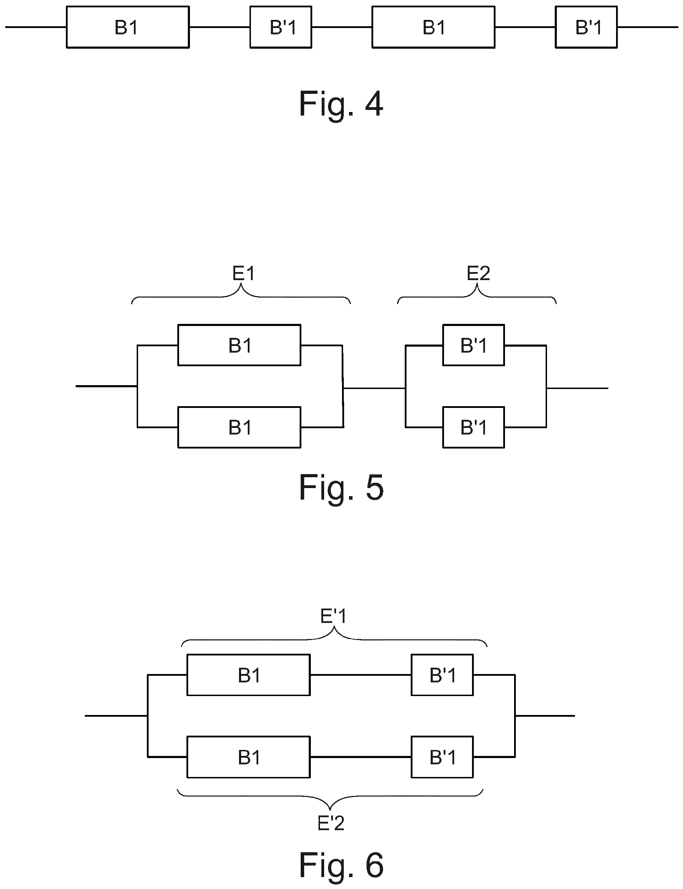

Selon une première configuration correspondant à la figure 4, les différents bobinages sont associés en série, un bobinage B1 associé à une dent du premier type D1 étant associé en série à un bobinage B'1 associé à une dent du deuxième type D2.

Selon une deuxième configuration correspondant à la figure 5, les bobinages B1 et B'1 associés aux dents d'un même type D1 et D2 sont associés en parallèle pour former un premier et un deuxième sous-ensembles notés respectivement E1 et E2, les deux sous-ensembles étant reliés en série.

Selon une troisième configuration correspondant à la figure 6, un bobinage B1 associé à une dent du premier type D1 est reliée en série à un bobinage B'1 associé à une dent du deuxième type D2 pour former un sous-ensemble E'1 ou E'2, les deux sous-ensembles notés E'1 et E'2 étant reliés en parallèle.

La configuration choisie est la même pour toutes les phases.

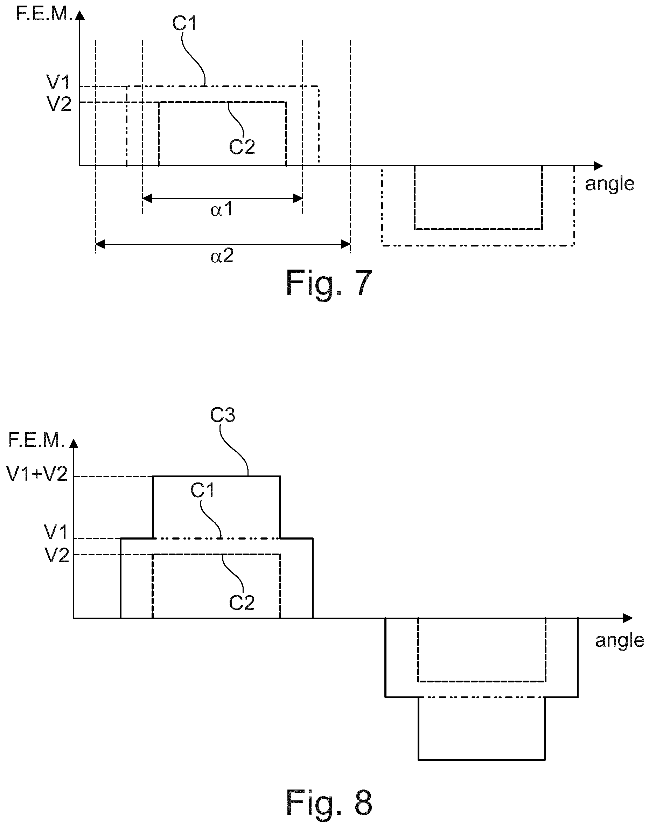

Comme représenté sur la figure 7, l'utilisation de dents d'un premier type D1 et d'un deuxième type D2 couvrant un angle électrique différent pour chaque phase du moteur électrique 1 permet d'obtenir des forces électromotrices en forme de créneaux notés respectivement C1 et C2 de largeur différente pour les dents du premier type D1 et du deuxième type D2. La largeur du créneau C1 correspond à un angle électrique supérieur à un angle α1 de 120° et inférieur à un angle α2 de 180°. La largeur du créneau C2 correspond à un angle électrique inférieur à un angle α1 de 120° (l'angle électrique de 120° correspondant à l'angle électrique moyen couvert par les dents d'une phase d'un moteur triphasé). De plus, comme indiqué précédemment le créneau C1 a une amplitude V1 plus importante que l'amplitude V2 du créneau C2 du fait du nombre de spires plus important pour les dents de type D1. L'amplitude V1 associée aux dents du premier type D1 est donc plus importante que l'amplitude V2 associée aux dents de type D2.

La figure 8 représente une courbe C3 correspondant à la somme des créneaux C1 et C2. En effet, sur la figure 1, on peut observer que les dents du premier type D1 et du deuxième type D2 associées à une phase viennent en regard d'un aimant permanent au même moment de sorte que la force électromotrice obtenue correspondant à la somme des forces électromotrices obtenues à partir des dents du premier type D1 et du deuxième type D2. La courbe C3 présente une forme en escalier qui se rapproche d'une forme sinusoïdale ce qui permet d'obtenir un fonctionnement plus fluide du moteur électrique 1. Ce fonctionnement plus fluide permet de réduire le niveau sonore et d'optimiser le rendement global du moteur électrique 1 en présentant un couple plus important à des vitesses de rotation faible.

La présente invention ne se limite pas à des moteurs électriques comprenant un stator ayant des dents de deux tailles différentes (couvrant deux angles électriques différentes) mais s'étend également à un nombre plus important de taille de dents différentes, par exemple trois ou quatre tailles de dents différentes (couvrant des angles électriques différents).

Le nombre de paires de pôles du stator peut également être différent de quatre.

## Revendications

1. Moteur électrique (1) à courant continu sans balais comportant :
- un rotor (3) comprenant au moins deux paires de pôles,
- un stator (5) présentant une pluralité de dents (D1, D2) autour desquelles sont enroulés des bobinages (B1, B2, B3, B'1, B'2, B'3) formant des bobines d'excitation électromagnétique du rotor (3),
**caractérisé en ce que** le stator (5) comprend un premier type de dent (D1) couvrant un premier angle électrique et un deuxième type de dent (D2) couvrant un deuxième angle électrique différent du premier angle électrique et **en ce qu'**une phase du moteur est formée par des bobinages (B1, B'1 ou B2, B'2 ou B3, B'3) enroulés sur des dents du premier (D1) et du deuxième (D2) type.

2. Moteur électrique (1) selon la revendication 1 comprenant trois phases.

3. Moteur électrique (1) selon la revendication 2 dans lequel les trois phases couvrent le même angle électrique et sont décalées de 120° électriques les unes des autres.

4. Moteur électrique (1) selon la revendication 3 dans lequel une phase est associée à deux dents du premier type (D1) et deux dents du deuxième type (D2), les dents du même type (D1, D2) associées à une phase étant disposées à 180° mécaniques l'une de l'autre, les différentes dents (D1, D2) associées une phase étant disposées à 90° mécaniques les unes des autres.

5. Moteur électrique (1) selon la revendication 4 dans lequel le rapport entre l'angle électrique couvert par le deuxième type de dent (D2) et l'angle électrique couvert par le premier type de dent (D1) est compris entre 0,6 et 0,9, l'ensemble des dents (D1, D2) associées à une phase couvrant un angle électrique correspondant à 360° divisé par le nombre de paires de pôles du rotor (3).

6. Moteur électrique (1) selon l'une des revendications précédentes dans lequel le nombre de spires d'un bobinage (B1, B2, B3) enroulé sur une dent du premier type (D1) et le nombre de spires d'un bobinage (B'1, B'2, B'3) du deuxième type (D2) est le même.

7. Moteur électrique (1) selon l'une des revendications 1 à 5 dans lequel le nombre de spires d'un bobinage (B1, B2, B3) enroulé autour d'une dent du premier type (D1) est supérieur au nombre de spires d'un bobinage (B'1, B'2, B'3) enroulé autour d'une dent du deuxième type (D2).

8. Moteur électrique (1) selon l'une des revendications 1 à 5 dans lequel le nombre de spires d'un bobinage (B1, B2, B3) enroulé autour d'une dent du premier type (D1) est inférieur au nombre de spires d'un bobinage (B'1, B'2, B'3) enroulé autour d'une dent du deuxième type (D2).

9. Moteur électrique (1) selon l'une des revendications précédentes dans lequel les bobinages (B1, B2, B3, B'1, B'2, B'3) associés à une phase sont reliés en série.

10. Moteur électrique (1) selon l'une des revendications 1 à 8 dans lequel les bobinages (B1, B2, B3) associés à une phase et enroulés sur des dents du premier type (D1) sont reliés en parallèle pour former un premier sous-ensemble (E1), les bobinages (B'1, B'2, B'3) associés à ladite phase et enroulés sur des dents du deuxième type (D2) sont reliés en parallèle pour former un deuxième sous-ensemble (E2), le premier (E1) et le deuxième (E2) sous-ensembles étant reliés en série.

11. Moteur électrique (1) selon l'une des revendications 1 à 8 dans lequel un bobinage (B1, B2, B3) enroulé sur une dent du premier type (D1) et associé à une phase est relié en série à un bobinage (B'1, B'2, B'3) enroulé sur une dent du deuxième type (D2) et associé à ladite phase pour former un sous-ensemble (E'1, E'2), les différents sous-ensembles (E'1, E'2) associés à une phase étant reliés en parallèle.

12. Moteur électrique (1) selon l'une des revendications précédentes dans lequel le rotor (3) comprend quatre paires de pôles.

13. Véhicule automobile comprenant un moteur électrique (1) selon l'une des revendications précédentes.
